# EUROPÄISCHE PATENTSCHRIFT

(11) **EP 1 078 933 B1**
(45) Veröffentlichungstag und Bekanntmachung des Hinweises auf die Patenterteilung: **30.07.2003**
(21) Anmeldenummer: 00116653.7
(22) Anmeldetag: 02.08.2000
(51) Int. Cl.: C08B 15/06, C08B 3/14, C08B 1/02

(54) **Verfahren zur Herstellung von alkalilöslichem Cellulosecarbamat**
Process for preparing alkali-soluble cellulose carbamate
Procédé pour la préparation de cellulose carbamate soluble en milieu alcalin

(30) Priorität: 25.08.1999 DE 19940393
(43) Veröffentlichungstag der Anmeldung: 28.02.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: Loth, Fritz, 14513 Teltow (DE); Lang, Hermann, 14513 Teltow (DE); Schleicher, Harry, 14513 Teltow (DE)

(56) Entgegenhaltungen:
- DE-A- 19 715 617
- DE-C- 19 635 707
- US-A- 2 134 825
- MANN G ET AL: "Cellulose ethers with a block-like distribution of the substituents by structure-selective derivatization of cellulose" POLYMER,GB,ELSEVIER SCIENCE PUBLISHERS B.V, Bd. 39, Nr. 14, 1. Juni 1998 (1998-06-01), Seiten 3155-3165, XP004119000 ISSN: 0032-3861

## Beschreibung

Die vorliegende Erfindung betrifft ein Verfahren zur Herstellung von alkalilöslichem Cellulosecarbamat durch Umsetzung von Cellulose und Harnstoff bei erhöhter Temperatur, wobei die Cellulose vor und/oder während der Umsetzung mit Alkalihydroxid aktiviert wird. Derartige Verfahren werden insbesondere in der chemischen Industrie zur Herstellung von Celluloseformkörpern, beispielsweise von Celluloseregeneratfasern, -folien oder -perlen eingesetzt.

Verfahren zur Herstellung von Cellulosecarbamat sind seit langem bekannt und haben in den letzten Jahren in Zusammenhang mit der Suche nach neuen, zum Viskoseverfahren alternativen Wegen der Celluloseregeneratfaserherstellung besondere Aufmerksamkeit erlangt.

Verschiedene Verfahren aus dem Stand der Technik basieren darauf, daß Zellstoff mit einer konzentrierten wäßrigen Harnstoff-Lösung imprägniert, überschüssige Lösung abgepreßt, der Preßkuchen getrocknet und das trockene Cellulose-Harnstoff-Gemisch auf Temperaturen über 130 °C erhitzt wird. Bei diesem Trockenverfahren werden jedoch in der Regel Produkte erhalten, die nur unbefriedigend anschließend in Natronlauge löslich sind. Eine vollständige Auflösung des Cellulosecarbamats in Natronlauge ist dann zufriedenstellend gegeben, wenn Substitionsgrade um 0,2 oder größer, eine gleichmäßige Verteilung der Substituenten und eine möglichst geringe Vernetzung in dem Cellulosecarbamat vorliegt.

Bereits 1938 offenbarten zwei Patente, die US 21 29 708 und die US 21 34 825, die Umsetzung von Cellulose mit Harnstoff in der Hitze, bei denen Zusätze von NaOH als Katalysator verwendet wurden. Auch in neueren Patenten, der EP 40 26 05, und der EP 40 26 06, wird die Imprägnierung der Cellulose mit Harnstofflösung in Gegenwart von 2 bis 10 %iger Natronlauge offenbart. Die Löslichkeit der durch diese Verfahren gewonnenen Cellulosecarbamatprodukte in Natronlauge ist jedoch noch unbefriedigend. Daher wird der Löselauge meist noch ≥ 1 % ZnO zugesetzt.

Bessere Ergebnisse wurden bereits erhalten, wenn der eingesetzte Zellstoff vor der Umsetzung mit Harnstoff einer strukturverändernden Vorbehandlung, z.B. mit konzentrierter Natronlauge, wie in der PL 289830 und der PL 269143 offenbart, oder mit flüssigem Ammoniak, wie in der DE 196 28 277 und der FI 81 02 26, offenbart, unterworfen wurde. Diese Aktivierungsverfahren sind jedoch sehr aufwendig und kostenintensiv. So muß beispielsweise der Ammoniak mit hohem Energieaufwand bei tiefen Temperaturen kondensiert und zurückgewonnen werden. Die konzentrierte Natronlauge muß zur Vermeidung eines zu starken Kettenabbaus der Cellulose bei der Umsetzung mit Harnstoff wenigstens teilweise aus der Cellulose mit Wasser oder harnstoffhaltigem Wasser oder Methanol ausgewaschen werden.

Neben der Erhitzung der trockenen Reaktionsmischung auf über 130 °C offenbaren die DE 42 42 437, die DE 44 17 140 und die DE 197 15 617 die Verwendung einer inerten organischen Flüssigkeit als Reaktionsmedium und als Wärmeüberträger. Die aufgrund der schlechten Wärmeübergänge erforderlichen langen Reaktionszeiten, der hohe Energieeinsatz und die lokalen Überhitzungen, die zu Ungleichmäßigkeiten und nachteiliger Qualität im Reaktionsprodukt führen, wie sie beim Trockenerhitzen der Cellulose-Harnstoff-Mischung auftreten, werden durch dieses Reaktionsmedium vermieden. Nachteilig daran ist jedoch, daß der Umgang mit diesen Lösungsmitteln, beispielsweise Toluol oder Xylol, und deren Entfernung und Rückgewinnung problematisch sind.

Aufgabe der vorliegenden Erfindung ist es, ein Verfahren zur Herstellung von alkalilöslichem Cellulosecarbamat anzugeben, das technisch einfach und kostengünstig durchgeführt werden kann und gleichzeitig qualitativ hochwertige, d.h. vollständig in Natronlauge lösliche Produkte liefert.

Diese Aufgabe wird durch das Verfahren nach dem Oberbegriff des Anspruchs 1 in Verbindung mit seinen kennzeichnenden Merkmalen gelöst. Vorteilhafte Weiterbildungen des erfindungsgemäßen Verfahrens werden in den abhängigen Ansprüchen gegeben.

Erfindungsgemäß wird die Cellulose vor der Umsetzung mit Harnstoff in einer Mischung aus einem C₁- bis C₄-Alkohol und Wasser mit Alkalihydroxid homogenisiert, wobei vorteilhafterweise der Anteil des Alkohols größer oder gleich ist als in einer azeotropen Alkohol-Wasser-Mischung, und anschließend das azeotrope Alkohol-Wasser-Gemisch durch Destillation entfernt. Dabei wird das Alkalihydroxid vorteilhafterweise nicht in solchen Mengen und Konzentrationen eingesetzt, wie sie üblicherweise zur Gitterumwandlung und Aktivierung der Cellulose erforderlich sind, sondern nur in Konzentrationen von 0,1 bis 10 Masse-%.

Bei dem erfindungsgemäßen Verfahren kann das für die Aktivierung der Cellulose eingesetzte Alkalihydroxid nach der Behandlung mit einer Carbonsäure oder einem Carbonsäureanhydrid partiell oder vollständig neutralisiert werden. Überraschenderweise wurde gefunden, daß nicht nur die Alkalihydroxide selbst sondern auch deren Mischung mit Alkalisalzen von Carbonsäuren die Umsetzung der Cellulose mit Harnstoff besonders katalysieren. Bevorzugt wird hierbei die Neutralisation mit Essigsäure oder Essigsäureanhydrid. Bei dem erfindungsgemäßen Verfahren kann also nicht nur die Cellulose mit einer geringeren als bisher üblichen Alkalimenge aktiviert werden, sondern die im System vorhandene Alkalimenge bzw. die durch Neutralisation erhaltenen Carbonsäuresalze werden als Katalysator für die Umsetzung der Cellulose mit Harnstoff eingesetzt.

Bei dem erfindungsgemäßen Verfahren werden vorteilhafterweise die bisher getrennt durchgeführten Verfahrensschritte des Molekulargewichtsabbaus der Cellulose, der Aktivierung und der Umsetzung von Cellulose mit Harnstoff zusammengefaßt und obendrein effektiver gestaltet. Damit ist erstmals ein Verfahren zugänglich, bei dem keine Alkalisierung mit anschließendem Abpressen oder Auswaschen der überschüssigen Alkali-Lauge und Trocknen der Mischung erforderlich ist. Daher kann das gesamte Verfahren im selben Reaktionsbehälter durchgeführt werden, ohne daß die Zwischenprodukte zwischenbehandelt oder umgesetzt werden müssen.

Dies wird insbesondere dadurch erreicht, daß bereits das Alkalihydroxid in einer geeigneten Mischung aus einem C₁- bis C₄-Alkohol mit Wasser der Cellulose zugegeben wird. Dabei jedoch verhält sich die Alkalihydroxid-Lauge im wäßrigen Anteil ähnlich wie eine unverdünnte Alkalihydroxid-Lauge, so daß das Alkalihydroxid in gegenüber dem Stand der Technik deutlich geringeren Mengen verwendet wird. Es ist nicht mehr nötig, wie im Stand der Technik beschrieben, die Lauge in einem starken Überschuß zuzusetzen und später die überschüssige Lauge abzutrennen.

Die im Stand der Technik vorgesehene Entfernung des Wassers, durch Austausch gegen ein Lösungsmittel, wie beispielsweise Xylol oder Toluol kann bei diesem erfindungsgemäßen Verfahren entfallen, da das Wasser in einer Mischung mit einem C₁ bis -C₄-Alkohol, vorteilhafterweise mit Isopropanol, vorliegt und folglich ohne jegliche weitere Vorbereitungsmaßnahmen einfach abdestilliert werden kann, wobei zuerst vornehmlich das Wasser mit den Alkoholen als azeotrop siedende Mischung gemeinsam abdestilliert wird. Danach werden auch die Alkohole entfernt, die die Carbamatreaktion stören würden.

Insgesamt wird ein Verfahren vorgestellt, bei dem es nicht nötig ist, zur Erzielung einer gleichmäßigen und effektiven Umsetzung der Cellulose mit Harnstoff, die Cellulose in einem separaten Aktivierungsschritt mit einem erheblichen Überschuß an konzentrierter Natronlauge zu behandeln, abzupressen, abzureifen und anschließend das überschüssige Alkali mit Wasser oder einem Alkohol wieder auszuwaschen, sondern daß in Gegenwart der erfindungsgemäß zu verwendenden, vorteilhafterweise azeotropen, vorteilhafterweise binär oder ternär azeotropen Alkohol-Wasser-Mischung die Aktivierung auch mit wesentlich geringeren Alkalimengen möglich ist, die nicht nur die Umsetzung katalytisch beschleunigen sondern auch bis zum Auswaschen der Nebenprodukte oder einer direkten Auflösung des Rohproduktes in Natronlauge in der Reaktionsmischung verbleiben können.

Die Verwendung der genannten Wasser-Alkohol-Alkalihydroxid-Mischungen gewährleistet eine effektive Aktivierung der Cellulose. Auch die für die Umsetzung erforderliche Harnstoffmenge kann über diese Alkohol-Wasser-Mischung homogen in die Cellulose eingebracht werden. Dies kann auch gleichzeitig erfolgen und ermöglicht einen gezielten alkalisch-oxidativen Abbau der Cellulose bis zu dem gewünschten Polymerisationsgrad.

Eine separate Abreife der Alkalicellulose in der technisch üblichen abgepreßten Form mit Alkaligehalten um 15 Masse-% und Cellulosegehalten um 30 Masse-% nach dem Stand der Technik ist bei dem erfindungsgemäßen Verfahren nicht notwendig. So ist es auch möglich, die Abnahme des Polymerisationsgrades der Cellulose gezielt zu steuern bzw. sehr gering zu halten, wenn der Harnstoff gemeinsam mit dem Alkalihydroxid und dem Alkohol-Wassergemisch oder als Alkalihydroxid-Harnstoff-Wasser-Alkohol-Mischung der Cellulose zugesetzt wird.

Erfindungsgemäß schließt sich an die Destillation und Trocknung der Reaktionsmischung die Umsetzung der Cellulose mit dem Harnstoff durch Erhöhung der Temperatur auf über 100 °C, vorteilhafterweise 120 - 160 °C an. Dies kann in bekannter Weise in dem bisherigen Reaktor, ggf. auch in Gegenwart eines aus dem Stand der Technik bekannten, dann zuzugebenden, inerten organischen Lösungsmittels, erfolgen. Vorteilhafterweise erfolgt die Umsetzung im gleichen Reaktionsgefäß, in dem auch die Aktivierung, Destillation und die Trocknung durchgeführt wurden. Auf diese Weise kann das gesamte Verfahren der Zellstoffaktivierung und -abreife sowie der Carbamatherstellung in nur einem Reaktor ohne Zwischenentleerung und ohne zusätzliche Imprägnier-, Abpreß-, Wasch-, Filtrations- oder Zentrifugationsschritte erfolgen.

Als Cellulose können die üblichen Chemie-Zellstoffe mit Polymerisationsgraden (DP_{Cuoxam}) zwischen 300 und 1500 in zerkleinerter oder gemahlener Form verwendet werden. Bei dem vorgeschlagenen Verfahren erfolgt dann eine partielle alkalisch-oxidative Depolymerisation kurz vor der eigentlichen Umsetzung bis auf DP-Werte zwischen 250 und 500. Durch Arbeiten unter Inertgasatmosphäre und/oder Arbeiten bei niedrigeren Temperaturen und/oder Verkürzung der Einwirkungszeit des Alkalihydroxids auf die Cellulose, indem man den Harnstoff gleichzeitig mit dem Alkalihydroxid zusetzt, kann die Depolymerisation gesteuert oder auch weitgehend vermieden werden.

Das Verfahren soll nun konkret für den Fall eines azeotropen Alkohol-Wasser-Gemisches beschrieben werden.

Erfindungsgemäß wird die Cellulose zunächst mit dem Alkohol bzw. der Alkoholmischung oder einem wäßrigalkoholischen Gemisch versetzt, wobei als Alkohole solche mit 1 bis 4 C-Atomen verwendet werden. Bevorzugte Alkohole sind die Isomeren von Propanol und/oder Butanol, Methanol oder Ethanol in einem solchen Verhältnis, daß mit Wasser azeotrop siedende, binäre oder ternäre Gemische resultieren. Der Cellulosegehalt im Alkalisiermedium beträgt vorteilhafterweise 3 bis 15 Masse-%. Anschließend wird das Alkalihydroxid, insbesondere Natriumhydroxid, in fester Form oder als Starklauge zugesetzt. Der Gesamtwassergehalt im System soll dabei zwischen 4 und 30 Masse-% betragen. Die Lauge kann jedoch auch bereits in einer fertigen azeotropen Wasser-Alkohol-Mischung zugesetzt werden. Nach 10 Minuten bis 4 Stunden Rühren bei Raumtemperatur oder Kühlung bis auf zu -10 °C ist das gesamte Alkali von der Cellulose aufgenommen. Durch anschließendes Erhitzen der Alkali-Cellulose-Mischung auf 30 bis 80 °C bei einer Behandlungszeit bis zu 30 Stunden kann der Polymerisationsgrad der Cellulose gezielt abgebaut werden. Der erforderliche Harnstoff für die Umsetzung der Cellulose wird dann in fester Form zugegeben und mit der Mischung homogenisiert. Der Harnstoff kann jedoch ebenfalls bereits zuvor oder auch erst jetzt gelöst oder suspendiert in einer Wasser-Alkohol-Mischung zugegeben werden. Zur Erzielung von Substitutionsgraden zwischen 0,1 und 0,7 sind Harnstoffmengen von 0,5 bis 5 Mol/1 Mol Anhydroglukoseeinheit (AGE) erforderlich. Die Mischung wird dann homogenisiert und das Alkohol-Wasser-Gemisch kann nun in einfacher Weise durch Destillation abgetrennt werden. Wenn erfindungsgemäß azeotrop siedende Mischungen von C₁- bis C₄-Alkoholen eingesetzt werden, genügt ein einziger Lösungsmittelkreislauf. Das Destillat kann direkt wieder als Suspensionsmedium oder zum Auswaschen der Nebenprodukte eingesetzt werden.

Die eigentliche Umsetzung des Cellulose-Harnstoff-Gemisches erfolgt in trockener Form oder nach Zugabe geeigneter inerter Flüssigkeiten als Wärmeüberträger, wie beispielsweise Xylol, durch Erhitzen auf Temperaturen über 100 °C, vorteilhafterweise zwischen 120 und 160 °C. Die für die Umsetzung erforderlichen Reaktionszeiten liegen bei 15 Minuten bis 5 Stunden. Die Umsetzung wird vorteilhafterweise direkt im Anschluß an die Entfernung des Suspensionsmittels (Alkohol-Wasser-Gemisch) im gleichen Reaktor durchgeführt.

Anschließend können die bei der Reaktion gebildeten Nebenprodukte in bekannter Weise mit Wasser und/oder Alkohol oder mit dem durch Destillation abgetrennten oder gereinigten Alkohol-Wasser-Gemisch gewaschen werden.

Im folgenden werden einige Ausführungsbeispiele des erfindungsgemäßen Verfahrens gegeben.

### Beispiel 1

16,2 g (0,1 Mol AGE der Cellulose) gemahlene Linterscellulose (Wassergehalt 8 % DP_{Cuoxam}690) werden in einer Mischung aus 336 ml 2-Propanol, 17 ml Methanol und 27 ml Wasser suspendiert. Nach Zugabe von 4 g (0,1 Mol) festem NaOH wird zunächst 90 min und nach anschließender Zugabe von 18 g (0,3 Mol) Harnstoff nochmals 30 min bei 20 °C gerührt. Dann wird das Lösungsmittelgemisch abdestilliert, die Reaktionsmischung im Vakuum nachgetrocknet und in getrennten Chargen von jeweils ca. 12 g im Trockenschrank a) 30 min, b) 60 min oder c) 90 min auf 140 °C erhitzt. Nach dem Abkühlen werden die Produkte zunächst mit Wasser und dann mit Ethanol gewaschen und anschließend getrocknet.

Es werden helle, leicht gelbliche Cellulosecarbamate erhalten, die sich bei -5 °C klar und vollständig in 10 %iger Natronlauge lösen. Der Stickstoffgehalt in den Proben beträgt a) 1,52 %, b) 2,49 % bzw. c) 2,78 % und der DP-Wert entsprechend a) 679, b) 670 bzw. c) 652.

### Beispiel 2

Analog Beispiel 1 werden Cellulosecarbamate hergestellt, wobei zur Alkalisierung 0,2 Mol NaOH pro 0,1 Mol AGU der Cellulose eingesetzt werden.

Es werden ebenfalls helle, leicht gelbliche Cellulosecarbamate erhalten, die sich bei -5 °C klar und vollständig in 10 %iger Natronlauge lösen. Der Stickstoffgehalt in den Proben beträgt a) 0,86 %, b) 1,75 % bzw. c) 2,03 % und der DP-Wert entsprechend a) 575, b) 562 bzw. c) 539.

### Beispiel 3

Analog Beispiel 1 werden Cellulosecarbamate hergestellt, wobei zur Alkalisierung 0,05 Mol NaOH pro 0,1 Mol AGE der Cellulose eingesetzt werden.

Es werden ebenfalls helle, leicht gelbliche Cellulosecarbamate erhalten, die sich bei -5 °C klar und vollständig in 10 %iger Natronlauge lösen. Der Stickstoffgehalt in den Proben beträgt a) 1,31 %, b) 2,12 % bzw. c) 2,40 %.

### Beispiel 4

3,0 kg gemahlener Fichtensulfit-Zellstoff (DP 750) werden in einem Mischer mit 20 l 2-Propanol und 1 l Methanol gemischt. Dann wird eine Lösung aus 667 g NaOH und 1,5 l Wasser aufgesprüht und 24 h bei 35 °C alkalisiert. Dabei sinkt der DP auf 420 Einheiten. Nach Zugabe von 3 kg Harnstoff in fester Form wird zunächst noch 1 Stunde bei 60 °C gemischt und anschließend das Alkohol-Wasser-Gemisch bei ca. 90 °C abdestilliert. Die trockene Reaktionsmischung wird noch 4 Stunden auf 140 °C erhitzt, abgekühlt und mit Wasser gewaschen.

Nach dem Trocknen wird ein leicht gelbliches Cellulosecarbamat erhalten, das sich bei einer Konzentration von 8 Masse-% bei -5 °C klar und vollständig in 9,5 %iger Natronlauge löst. Der Stickstoffgehalt in der Probe beträgt 1,45 % und der DP 320.

### Beispiel 5

17 g (0,1 Mol) lufttrockener gemahlener Fichtensulfitzellstoff mit einem Ausgangs-DP von 750 werden in einer azeotrop siedenden Mischung aus 336 ml 2-Propanol, 17 ml Methanol und 27 ml Wasser suspendiert und nach Zugabe von 4 g (0,1 Mol) festem NaOH 90 min bei Raumtemperatur alkalisiert. Anschließend werden zunächst 18 g (0,3 Mol) Harnstoff und dann 6 g (0,1 Mol) Eisessig zugegeben. Nach 30 min wird das Wasser-Alkohol-Gemisch bei 60 °C im Vakuum abdestilliert. Die trockene Reaktionsmischung wird im Trockenschrank a) 30 min, b) 60 min, c) 120 min oder d) 240 min auf 140 °C erhitzt. Nach dem Abkühlen werden die Produkte zunächst mit Wasser und dann mit einer azeotrop siedenden Mischung aus 2-Propanol, Methanol und Wasser gewaschen.

Es werden helle, leicht gelbliche Produkte erhalten, die sich klar und vollständig bei -5 °C in 10 %iger Natronlauge lösen. Der Stickstoffgehalt in den Proben beträgt a) 2,3 %, b) 3,9 %, c) 4,6 % bzw. d) 4,8 %.

## Patentansprüche

1. Verfahren zur Herstellung von alkalilöslichem Cellulosecarbamat durch Aktivierung der Cellulose und Umsetzung von Cellulose und Harnstoff bei erhöhter Temperatur, **dadurch gekennzeichnet, daß** die Cellulose vor der Umsetzung allein oder in Gegenwart von Harnstoff mit einer Mischung aus mindestens einem C₁- bis C₄-Alkohol, Wasser und Alkalihydroxid behandelt, Wasser und Alkohol durch Destillation entfernt werden und die Umsetzung in Gegenwart von Alkalihydroxid und/oder dem Alkalisalz einer Carbonsäure durchgeführt wird.

2. Verfahren nach dem vorhergehenden Anspruch, **dadurch gekennzeichnet, daß** als C₁- bis C₄-Alkohole Isomere von Propanol oder Butanol, Methanol, Ethanol oder Mischungen hiervon verwendet werden.

3. Verfahren nach einem der vorhergehenden Ansprüche, **dadurch gekennzeichnet, daß** die Cellulose mit einer Mischung mit einem Anteil des C₁- bis C₄-Alkohols im Alkohol-Wasser-Gemisch größer oder gleich dem Anteil des Alkohols in einem azeotrop siedenden binären oder ternären Alkohol-Wasser-Gemisch behandelt wird.

4. Verfahren nach einem der vorhergehenden Ansprüche, **dadurch gekennzeichnet, daß** die Cellulose mit einer Mischung mit einem Anteil des C₁- bis C₄-Alkohols im Alkohol-Wasser-Gemisch von 70 bis 96 Masse-% behandelt wird.

5. Verfahren nach einem der vorhergehenden Ansprüche, **dadurch gekennzeichnet, daß** als Alkalihydroxid Natriumhydroxid verwendet wird.

6. Verfahren nach einem der vorhergehenden Ansprüche, **dadurch gekennzeichnet, daß** die Cellulose mit einer Mischung aus Alkohol, Wasser und Alkalihydroxid mit 0,1 bis 10 Masse-% Alkalihydroxid in gelöster oder dispergierter Form behandelt wird.

7. Verfahren nach Anspruch 6, **dadurch gekennzeichnet, daß** die Mischung 1,0 bis 5,0 Masse-% Natriumhydroxid enthält.

8. Verfahren nach einem der vorhergehenden Ansprüche, **dadurch gekennzeichnet, daß** der Harnstoff in fester Form und/oder gelöst und/oder suspendiert in der Mischung aus Alkohol, Wasser und Alkalihydroxid oder deren Bestandteilen zugegeben wird.

9. Verfahren nach einem der vorhergehenden Ansprüche, **dadurch gekennzeichnet, daß** die Cellulose während 10 min bis zu 30 h bei einer Temperatur zwischen -10 und 80 °C mit der Mischung aus Alkohol, Wasser und Alkalihydroxid behandelt wird.

10. Verfahren nach einem der vorhergehenden Ansprüche, **dadurch gekennzeichnet, daß** die Cellulose mit der Mischung aus Alkohol, Wasser und Alkalihydroxid bei gleichzeitiger intensiver mechanischer Durchmischung und/oder Scherung behandelt wird.

11. Verfahren nach einem der vorhergehenden Ansprüche, **dadurch gekennzeichnet, daß** die Cellulose bei einem Flottenverhältnis von Cellulose zur Alkohol-Wasser-Mischung von 1:5 bis 1:25 behandelt wird.

12. Verfahren nach einem der vorhergehenden Ansprüche, **dadurch gekennzeichnet, daß** vor der Umsetzung von Cellulose mit Harnstoff Wasser und Alkohol durch Destillation als azeotropes Gemisch entfernt werden.

13. Verfahren nach einem der vorhergehenden Ansprüche, **dadurch gekennzeichnet, daß** das Alkalihydroxid vor dem Abdestillieren von Wasser und Alkohol mit einer Carbonsäure und/oder einem Carbonsäureanhydrid partiell oder vollständig neutralisiert wird.

14. Verfahren nach Anspruch 13, **dadurch gekennzeichnet, daß** als Carbonsäure und/oder Carbonsäureanhydrid Essigsäure bzw. Essigsäureanhydrid eingesetzt wird.

15. Verfahren nach einem der vorhergehenden Ansprüche, **dadurch gekennzeichnet, daß** die Cellulose mit 0,5 bis 5 Mol Harnstoff in Gegenwart von 0,2 bis 2 Mol Alkalihydroxid pro 1 Mol Anhydroglucoseeinheit umgesetzt wird.

16. Verfahren nach einem der vorhergehenden Ansprüche, **dadurch gekennzeichnet, daß** die Cellulose mit Harnstoff in Gegenwart von 0,2 bis 2 Mol einer Mischung aus 0 bis 100 Mol-% Alkalihydroxid und 100 bis 0 Mol-% des Alkalisalzes einer Carbonsäure mit einem Anteil von Alkalihydroxid und Alkalisalz einer Carbonsäure von zusammen ≤ 100 Mol-% pro 1 Mol Anhydroglucoseeinheit umgesetzt wird.

17. Verfahren nach einem der vorhergehenden Ansprüche, **dadurch gekennzeichnet, daß** die Cellulose mit Harnstoff in Gegenwart von Alkalihydroxid und/oder dem Alkalisalz einer Carbonsäure in einem Intensivmischer umgesetzt wird.

18. Verfahren nach einem der vorhergehenden Ansprüche, **dadurch gekennzeichnet, daß** die Cellulose mit Harnstoff in Gegenwart von Alkalihydroxid und/oder dem Alkalisalz einer Carbonsäure bei Temperaturen über 100 °C umgesetzt wird.

19. Verfahren nach Anspruch 18, **dadurch gekennzeichnet, daß** die Temperatur zwischen 120 und 160 °C liegt.

20. Verfahren nach einem der vorhergehenden Ansprüche, **dadurch gekennzeichnet, daß** die Cellulose mit Harnstoff in Gegenwart von Alkalihydroxid und/oder dem Alkalisalz einer Carbonsäure in einem inerten flüssigen Reaktionsmedium und/oder einer Inertgasatmosphäre umgesetzt wird.

21. Verfahren nach einem der vorhergehenden Ansprüche, **dadurch gekennzeichnet, daß** das nebenprodukthaltige Cellulosecarbamat mit dem abdestillierten Alkohol-Wasser-Gemisch ausgewaschen wird.

## Claims

1. Process for the production of alkali-soluble cellulose carbamate by activating the cellulose and converting cellulose and urea at elevated temperature, **characterised in that** prior to conversion the cellulose is treated, alone or in the presence of urea, with a mixture comprising at least one C₁- to C₄-alcohol, water and alkali hydroxide, water and alcohol are removed by distillation and the conversion is conducted in the presence of alkali hydroxide and/or the alkali salt of a carboxylic acid.

2. Process according to one of the preceding claims, **characterised in that** isomers of propanol or butanol, methanol, ethanol or mixtures thereof are used as C₁- to C₄-alcohols.

3. Process according to one of the preceding claims, **characterised in that** the cellulose is treated with a mixture with a proportion of the C₁- to C₄-alcohol in the alcohol-water mixture which is greater than or equal to the proportion of alcohol in an azeotropically boiling binary or ternary alcohol-water mixture.

4. Process according to one of the preceding claims, **characterised in that** the cellulose is treated with a mixture with a proportion of the C₁- to C₄-alcohol in the alcohol-water mixture of 70 to 96% by mass.

5. Process according to one of the preceding claims, **characterised in that** sodium hydroxide is used as alkali hydroxide.

6. Process according to one of the preceding claims, **characterised in that** the cellulose is treated with a mixture comprising alcohol, water and alkali hydroxide with 0.1 to 10% by mass alkali hydroxide in dissolved or dispersed form.

7. Process according to Claim 6, **characterised in that** the mixture contains 1.0 to 5.0% by mass sodium hydroxide.

8. Process according to one of the preceding claims, **characterised in that** the urea is added in solid form and/or dissolved and/or suspended in the mixture comprising alcohol, water and alkali hydroxide or constituents thereof.

9. Process according to one of the preceding claims, **characterised in that** the cellulose is treated with the mixture comprising alcohol, water and alkali hydroxide for 10 minutes to 30 hours at a temperature between -10° and 80°C.

10. Process according to one of the preceding claims, **characterised in that** the cellulose is treated with the mixture comprising alcohol, water and alkali hydroxide with simultaneous intensive mechanical mixing and/or shearing.

11. Process according to one of the preceding claims, **characterised in that** the cellulose is treated with a liquor ratio of cellulose to the alcohol-water mixture of 1:5 to 1:25.

12. Process according to one ofthe preceding claims, **characterised in that** prior to the conversion of cellulose with urea, water and alcohol are removed as azeotropic mixture by distillation.

13. Process according to one of the preceding claims, **characterised in that** before the water and alcohol are distilled off, the alkali hydroxide is partially or completely neutralised with a carboxylic acid and/or a carboxylic acid anhydride.

14. Process according to Claim 13, **characterised in that** acetic acid or acetic acid anhydride is used as carboxylic acid and/or carboxylic acid anhydride.

15. Process according to one of the preceding claims, **characterised in that** the cellulose is converted with 0.5 to 5 mole of urea in the presence of 0.2 to 2 mole of alkali hydroxide per 1 mole of anhydroglucose unit.

16. Process according to one of the preceding claims, **characterised in that** the cellulose is converted with urea in the presence of 0.2 to 2 mole of a mixture comprising 0 to 100% mole of alkali hydroxide and 100 to 0% mole of the alkali salt of a carboxylic acid with a proportion of alkali hydroxide and alkali salt of a carboxylic acid together of £ 100 % mole per 1 mole of anhydroglucose unit.

17. Process according to one of the preceding claims, **characterised in that** the cellulose is converted with urea in the presence of alkali hydroxide and/or the alkali salt of a carboxylic acid in an intensive mixer.

18. Process according to one of the preceding claims, **characterised in that** the cellulose is converted with urea in the presence of alkali hydroxide and/or the alkali salt of a carboxylic acid at temperatures above 100°C.

19. Process according to Claim 18, **characterised in that** the temperature lies between 120° and 160°C.

20. Process according to one of the preceding claims, **characterised in that** the cellulose is converted with urea in the presence of alkali hydroxide and/or the alkali salt of a carboxylic acid in an inert liquid reaction medium and/or an inert gas atmosphere.

21. Process according to one of the preceding claims, **characterised in that** the cellulose carbamate containing by-products is washed with the distilled off alcohol-water mixture.

## Revendications

1. Procédé de préparation de carbamate de cellulose soluble en milieu alcalin par activation de la cellulose et réaction de cellulose et d'urée à température augmentée,
**caractérisé en ce qu'**
on traite la cellulose avant la réaction, seule ou en présence d'urée, avec un mélange d'alcool en C₁ à C₄, d'eau et d'un hydroxyde de métal alcalin, on retire l'eau et l'alcool par distillation et on conduit la réaction en présence d'hydroxyde de métal alcalin et/ou du sel de métal alcalin d'un acide carboxylique.

2. Procédé selon la revendication précédente,
**caractérisé en ce qu'**
on utilise comme alcools en C₁ à C₄ les isomères de propanol ou de butanol, le méthanol, l'éthanol ou leurs mélanges

3. Procédé selon l'une des revendications précédentes,
**caractérisé en ce qu'**
on traite la cellulose avec un mélange comportant une proportion d'alcool en C₁ à C₄ dans le mélange d'alcool et d'eau supérieure ou égale à la proportion d'alcool dans un mélange d'alcool et d'eau binaire ou ternaire bouillant de façon azéotropique.

4. Procédé selon l'une des revendications précédentes,
**caractérisé en ce qu'**
on traite la cellulose avec un mélange comportant une proportion de 70 à 96 % massique d'alcool en C₁ à C₄ dans le mélange d'alcool et d'eau.

5. Procédé selon l'une des revendications précédentes,
**caractérisé en ce qu'**
on utilise comme hydroxyde de métal alcalin l'hydroxyde de sodium.

6. Procédé selon l'une des revendications précédentes,
**caractérisé en ce qu'**
on traite la cellulose avec un mélange d'alcool, d'eau et d'hydroxyde de métal alcalin avec de 0,1 à 10 % massique d'hydroxyde de métal alcalin sous forme dissoute ou dispersée.

7. Procédé selon la revendication 6,
**caractérisé en ce que**
le mélange contient de 1,0 à 5,0 % massique d'hydroxyde de sodium.

8. Procédé selon l'une des revendications précédentes,
**caractérisé en ce qu'**
on ajoute l'urée sous forme solide et/ou dissoute et/ou en suspension dans le mélange d'alcool, d'eau et d'hydroxyde de métal alcalin ou de leurs constituants.

9. Procédé selon l'une des revendications précédentes,
**caractérisé en ce qu'**
on traite la cellulose pendant 10 minutes à 30 heures à une température comprise entre -10 et 80°C avec le mélange d'alcool, d'eau et d'hydroxyde de métal alcalin.

10. Procédé selon l'une des revendications précédentes,
**caractérisé en ce qu'**
on traite la cellulose avec le mélange d'alcool, d'eau et d'hydroxyde de métal alcalin, en mélangeant simultanément de manière intensive et/ou en cisaillant.

11. Procédé selon l'une des revendications précédentes,
**caractérisé en ce qu'**
on traite la cellulose avec un rapport de la cellulose au mélange d'eau et d'alcool dans le bain de 1 :5 à 1 :25.

12. Procédé selon l'une des revendications précédentes,
**caractérisé en ce qu'**
avant la réaction de la cellulose avec l'urée, on retire l'eau et l'alcool par distillation sous forme d'un mélange azéotropique.

13. Procédé selon l'une des revendications précédentes,
**caractérisé en ce qu'**
on neutralise partiellement ou entièrement l'hydroxyde de métal alcalin avant la distillation de l'eau et de l'alcool avec un acide carboxylique et/ou un anhydride d'acide carboxylique.

14. Procédé selon la revendication 13,
**caractérisé en ce qu'**
on utilise comme acide carboxylique et/ou comme anhydride d'acide carboxylique l'acide acétique ou selon les cas l'anhydride d'acide acétique.

15. Procédé selon l'une des revendications précédentes,
**caractérisé en ce qu'**
on fait réagir la cellulose avec de 0,5 à 5 moles d'urée en présence de 0,2 à 2 moles d'hydroxyde de métal alcalin pour une mole d'unité anhydroglucose.

16. Procédé selon l'une des revendications précédentes,
**caractérisé en ce qu'**
on fait réagir la cellulose avec de l'urée en présence de 0,2 à 2 moles d'un mélange constitué de 0 à 100 % molaire d'hydroxyde de métal alcalin et de 100 à 0 % molaire du sel de métal alcalin d'un acide carboxylique avec une proportion d'hydroxyde de métal alcalin et de sel alcalin d'un acide carboxylique représentant ensemble une quantité ≤ à 100 % molaire pour 1 mole d'unité anhydroglucose.

17. Procédé selon l'une des revendications précédentes,
caractérisé en qu'
on fait réagir la cellulose avec de l'urée en présence d'hydroxyde de métal alcalin et de sel de métal alcalin d'un acide carboxylique dans un mélangeur intensif.

18. Procédé selon l'une des revendications précédentes,
caractérisé en qu'
on fait réagir la cellulose avec de l'urée en présence d'hydroxyde de métal alcalin et/ou de sel de métal alcalin d'un acide carboxylique à des températures supérieures à 100°C.

19. Procédé selon la revendication 18,
caractérisé en que
la température se situe entre 120 et 160°C.

20. Procédé selon l'une des revendications précédentes,
**caractérisé en ce qu'**
on fait réagir la cellulose avec l'urée en présence d'hydroxyde de métal alcalin et/ou du sel de métal alcalin d'un acide carboxylique dans un milieu réactionnel liquide inerte et/ou une atmosphère de gaz inerte.

21. Procédé selon une des revendications précédentes,
**caractérisé en ce qu'**
on lave le carbamate de cellulose contenant des produits secondaires avec le mélange distillé d'alcool et d'eau.
